(19) **Europäisches Patentamt**
**European Patent Office**
**Office européen des brevets**

(11) **EP 1 588 554 B1**

(12) **EUROPÄISCHE PATENTSCHRIFT**

| | |
|---|---|
| (45) Veröffentlichungstag und Bekanntmachung des Hinweises auf die Patenterteilung: **20.02.2008 Patentblatt 2008/08** | (51) Int Cl.: ***H04N 5/235*** *(2006.01)* |
| (21) Anmeldenummer: **03779688.5** | (86) Internationale Anmeldenummer: **PCT/DE2003/003744** |
| (22) Anmeldetag: **12.11.2003** | (87) Internationale Veröffentlichungsnummer: **WO 2004/068850 (12.08.2004 Gazette 2004/33)** |

(54) **VERFAHREN ZUR EINSTELLUNG EINES BILDSENSORS**

METHOD FOR ADJUSTING AN IMAGE SENSOR

PROCEDE DE REGLAGE D'UN CAPTEUR D'IMAGES

| | |
|---|---|
| (84) Benannte Vertragsstaaten: **AT BE BG CH CY CZ DE DK EE ES FI FR GB GR HU IE IT LI LU MC NL PT RO SE SI SK TR** | (72) Erfinder:<br>• **FRANZ, Matthias 74074 Tuebingen (DE)**<br>• **FRITZ, Steffen 75449 Wurmberg (DE)**<br>• **HAUG, Karsten 70372 Stuttgart (DE)** |
| (30) Priorität: **17.01.2003 DE 10301898** | |
| (43) Veröffentlichungstag der Anmeldung: **26.10.2005 Patentblatt 2005/43** | (56) Entgegenhaltungen:<br>**EP-A- 0 784 399   WO-A-00/78038**<br>**US-A- 5 144 442   US-A- 5 387 930**<br>**US-A- 5 937 090   US-B1- 6 507 668** |
| (73) Patentinhaber: **ROBERT BOSCH GMBH 70442 Stuttgart (DE)** | |

**Beschreibung**

Stand der Technik

Die Erfindung betrifft ein Verfahren und eine Verarbeitungseinheit zur Einstellung der Kennlinie der Belichtungsempfindlichkeit eines Bildsensors, wobei sich der Bildsensor insbesondere in einem Kraftfahrzeug befindet.

Außenraumszenen weisen häufig einen weiten Bereich unterschiedlicher Bestrahlungsstärken auf. Insbesondere bei Verkehrsszenen im Kraftfahrzeugbereich tritt häufig ein großer Unterschied der Bestrahlungsstärken auf. Dies wird beispielsweise bei der Annäherung eines Kraftfahrzeuges im Tageslicht an eine Tunneleinfahrt deutlich. Während außerhalb des Tunnels die Umgebung des Kraftfahrzeuges durch die Sonne hell ist, beobachtet man im Tunnel selbst häufig nur eine schwache Beleuchtung. Bei der geplanten Ausstattung von Kraftfahrzeugen mit Bildsensoren, welche die Umgebung des Kraftfahrzeuges erfassen, ist es wünschenswert, dass die Bildsensoren diesen weiten Bereich von unterschiedlichen Bestrahlungsstärken verarbeiten. Bei der herkömmlichen Regelung eines Bildsensors wird der Bildsensor durch entsprechende Wahl der Parameter Gain, Offset, Integrationszeit und/oder Blende an die BeHchtungsverhältnisse angepasst. Bei neueren Entwicklungen von Bildsensoren folgt die Belichtungsempfindlichkeit nicht einer fest eingestellten, linearen oder logarithmischen Kennlinie, sondern die Kennlinie kann insbesondere in einzelnen linearen Abschnitten individuell eingestellt werden. Beispielsweise ist aus dem Patent US 6,345,68 vom 19. Februar 2002 ein CMOS-Bildsensor mit einer einstellbaren, abschnittweisen linearen Kennlinie bekannt. Hinweise auf ein Verfahren und eine Verarbeitungseinheit zur Erreichung eines hohen Informationsgehaltes von erzeugten Bildern fehlen in der US 6,345,681.

Aus der US 5,937,090 ist eine Vorrichtung und ein Verfahren zur Bildverbesserung bekannt, wobei der Kontrast verbessert und die mittlere Helligkeit beibehalten wird.

Die US 5,387,930 offenbart ein elektronisches Bilderfassungssystem mit Bildverbesserung, wobei eine Rückkopplung zur Einstellung der Bildhelligkeit vorgesehen ist.

Vorteile der Erfindung

Ein Verfahren und eine Vorrichtung gemäß der Erfindung sind in den Ansprüchen 1 und 4 ausgeführt.

Das nachfolgend beschriebene Verfahren zur Einstellung der Kennlinie der Belichtungsempfindlichkeit wenigstens eines Pixels wenigstens eines Bildsensors hat den Vorteil, dass die erzeugten Bildinformationen einen hohen Informationsgehalt aufweisen und einen weiten Dynamikbereich besitzen. Besonders vorteilhaft ist das nachfolgend beschriebene Verfahren bei einem Außeneinsatz des wenigstens einen Bildsensors, da im Außenbereich eine Vielzahl unterschiedlicher Bestrahlungsstärken gleichzeitig in einer Szene auftreten kann. Insbesondere ist das nachfolgend beschriebene Verfahren für den Einsatz in einem Kraftfahrzeug geeignet, da hierbei beispielsweise Straßenabschnitte, die gleichzeitig in voller Sonne liegen und Schattenbereiche haben, mit einem hohen Informationsgehalt der Bildinformationen abgebildet werden können. In vorteilhafter Weise nutzt das nachfolgend beschriebene Verfahren die zusätzlichen Freiheitsgrade einer Kennlinie der Belichtungsempfindlichkeit mit Abschnitten von Funktionen, insbesondere stetigen und/oder linearen Funktionen, damit der wenigstens eine Bildsensor ein Maximum an Informationen über die momentan abgebildete Szene in seinen Bildern einfängt.

Vorteilhaft ist die Approximation der Kennlinie der Belichtungsempfindlichkeit an die optimale Kennlinie der Belichtungsempfindlichkeit durch wenigstens ein numerisches Approximationsverfahren und/oder wenigstens ein Segmentierungsverfahren. Insbesondere die Approximation durch wenigstens ein Segmentierungsverfahren hat den Vorteil, dass das wenigstens eine Segmentierungsverfahren zu einer einfachen Implementierung des Verfahrens auf einem Mikroprozessor beiträgt.

Besonders vorteilhaft ist die Einstellung der Kennlinie der Belichtungsempfindlichkeit, wobei die Kennlinie in Abschnitten von linearen Funktionen gebildet wird. Kennlinien der Belichtungsempfindlichkeit mit abschnittweise linearen Funktionen tragen dazu bei, dass die Kennlinien zum einem im Bildsensor einfach realisierbar sind und zum anderen ermöglichen sie eine einfache algorithmische Implementierung des nachfolgend beschriebenen Verfahrens in der Verarbeitungseinheit.

Vorteilhaft ist die Einstellung der Kennlinie der Belichtungsempfindlichkeit wenigstens eines Pixels wenigstens eines Bildsensors in Abhängigkeit von Bildsignalen von wenigstens zwei Bildsensoren, insbesondere von wenigstens einer Stereokamera, welche mindestens aus zwei Sensoren besteht. Diese Vorgehensweise hat den Vorteil, dass durch eine Mittelwertbildung der Bildsignale die Genauigkeit und die Robustheit des Verfahrens zur Einstellung der Belichtungsempfindlichkeit wenigstens eines Pixels wenigstens eines Bildsensors erhöht wird.

Die beschriebenen Vorteile gelten entsprechend für das nachfolgend beschriebene Verfahren und/oder die nachfolgend beschriebene Verarbeitungseinheit und/oder das nachfolgend beschriebene Computerprogramm.

Vorteilhaft ist ein Computerprogramm mit Programmcode-Mitteln, um alle Schritte oder zumindest die wesentlichen Schritte des beschriebenen Verfahrens durchzuführen, wenn das Programm auf einem Computer ausgeführt wird. Der Einsatz eines Computerprogramms ermöglicht die schnelle und kostengünstige Anpassung des Verfahrens, beispielsweise an unterschiedliche Bildsensoren.

Weitere Vorteile ergeben sich aus der nachfolgenden Beschreibung von Ausführungsbeispielen mit Bezug auf die Figuren und aus den abhängigen Patentansprüchen.

Zeichnung

Die Erfindung wird nachstehend anhand der in der Zeichnung dargestellten Ausführungsformen näher erläutert.
Es zeigen:

- Figur 1 ein Diagramm mit Kennlinien der Belichtungsempfindlichkeit eines Bildsensors,
- Figur 2 ein Diagramm mit Kennlinien der Belichtungsempfindlichkeit eines Bildsensors in Abhängigkeit des Gains und des Offsets,
- Figur 3 ein Blockdiagramm des bevorzugten Ausführungsbeispiels.

Beschreibung von Ausführungsbeispielen

Nachfolgend werden ein Verfahren und eine Verarbeitungseinheit zur Einstellung der Kennlinie der Belichtungsempfindlichkeit wenigstens eines Pixels wenigstens eines Bildsensors in einem Kraftfahrzeug beschrieben. Im bevorzugten Ausführungsbeispiel wird in Abhängigkeit von Bildsignalen wenigstens eines Bildsensors aus dem Histogramm der Grauwerte wenigstens eines Bildes die optimale Kennlinie der Belichtungsempfindlichkeit bestimmt. Die frei definierbare, abschnittweise lineare Kennlinie des Bildsensors wird so gewählt, dass sie zumindest annähernd mit der optimalen Kennlinie übereinstimmt. Dabei wird neben der Größe und/oder der Position der Kennlinie der Belichtungsempfindlichkeit alternativ oder zusätzlich die Gestalt der Kennlinie eingestellt.

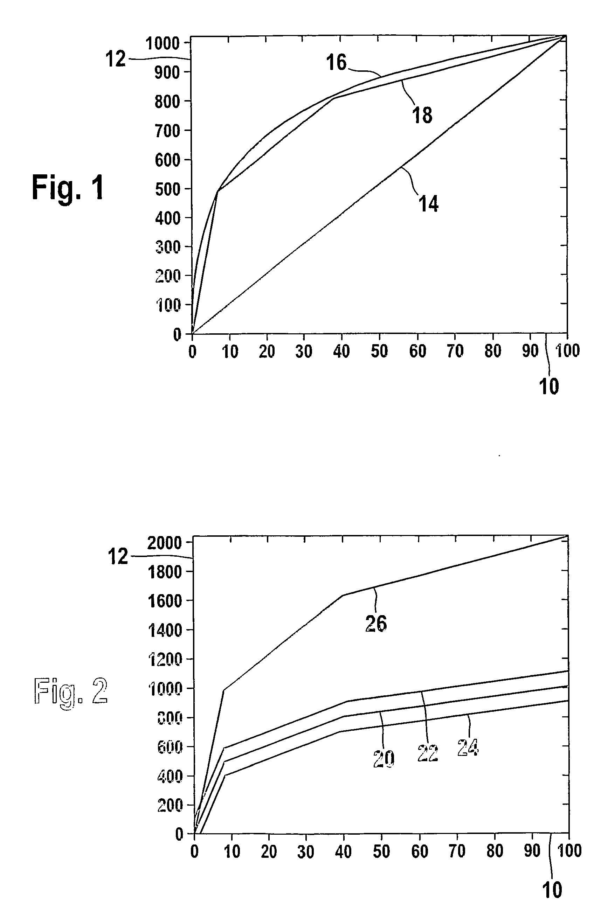

Figur 1 zeigt ein Diagramm mit drei Kennlinien der Belichtungsempfindlichkeit 14, 16, 18 eines Pixels eines Bildsensors. Auf der Abszisse ist die Belichtung 10 aufgetragen. Die Belichtung 10 ist hierbei in frei definierten virtuellen Einheiten von 0 bis 100 aufgetragen, wobei die Belichtung 10 beispielsweise ein Maß der Bestrahlungsstärke oder der Beleuchtungsstärke ist. Dabei ist die Bestrahlungsstärke eine physikalische Größe, welche die Strahlungsleistung pro Fläche angibt, während die Beleuchtungsstärke die entsprechende photometrische Größe mit der Einheit Lux ist, welche die spektrale Empfindlichkeit des menschlichen Auges berücksichtigt. Auf der Ordinate ist das Ausgangssignal 12 des Pixels des Bildsensors als frei definierte virtuelle Einheit von 0 bis 1000 aufgetragen. Das Ausgangssignal 12 kann dabei als digitales oder analoges Signal vorliegen. Als erste Form der Kennlinie der Belichtungsempfindlichkeit ist in Figur 1 eine lineare Kennlinie der Belichtungsempfindlichkeit 14 eingezeichnet. Weiter zeigt das Diagramm in Figur 1 eine logarithmische Kennlinie der Belichtungsempfindlichkeit 16 und eine abschnittweise lineare Kennlinie der Belichtungsempfindlichkeit 18.

Figur 2 zeigt ein Diagramm mit vier abschnittweise linearen Kennlinien der Belichtungsempfindlichkeit 20, 22, 24, 26 eines Pixels eines Bildsensors in Abhängigkeit des Gains und/oder des Offsets. Entsprechend Figur 1 ist auf der Abszisse die Belichtung 10 in frei definierten virtuellen Einheiten von 0 bis 100 aufgetragen. Auf der Ordinate ist das Ausgangssignal 12 des Pixels des Bildsensors als frei definierte virtuelle Einheit von 0 bis 2000 aufgetragen. Bei der ersten Kennlinie der Belichtungsempfindlichkeit 20 ist der Gain (Verstärkung) 1 und der Offset 0. Dagegen hat der Offset bei der zweiten Kennlinie der Belichtungsempfindlichkeit 22 einen Wert von +100, während er bei der dritten Kennlinie der Belichtungsempfindlichkeit 24 einen Wert von -100 aufweist. Sowohl bei der zweiten Kennlinie der Belichtungsempfindlichkeit 22 als auch bei der dritten Kennlinie der Belichtungsempfindlichkeit 24 ist der Gain 1. Bei der vierte Kennlinie der Belichtungsempfindlichkeit 26 beträgt der Gain 2 bei einem Offset von 0. Eine Änderung des Offsets verschiebt die Kennlinie der Belichtungsempfindlichkeit in Ordinatenrichtung, während eine Änderung des Gains und/oder eine Änderung der Integrationszeit die Kennlinie der Belichtungsempfindlichkeit in Ordinatenrichtung spreizt oder staucht. Eine frei konfigurierbare, abschnittweise lineare Kennlinie der Belichtungsempfindlichkeit, wie beispielsweise die erste Kennlinie der Belichtungsempfindlichkeit 20 in Figur 2, führt zu mehr Freiheitsgraden bei der Einstellung wenigstens eines Pixels des Bildsensors, da hier einzelne Abschnitte individuell eingestellt werden können. Neben der Größe und der Lage der Kennlinie der Belichtungsempfindlichkeit 20, 22, 24, 26 ist es hierdurch alternativ oder zusätzlich möglich, die Form der Kennlinie der Belichtungscmpfindlichkeit 20, 22, 24, 26 zu ändern.

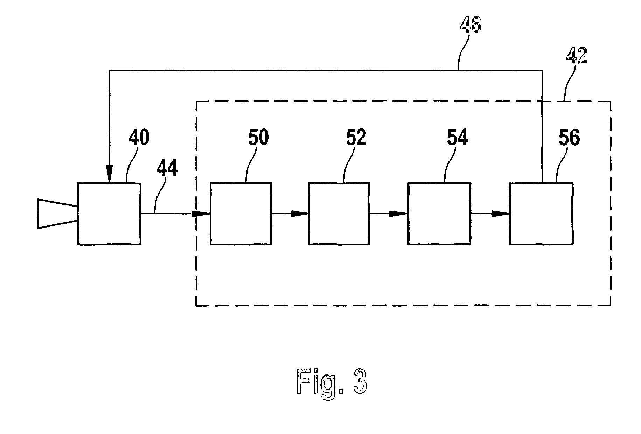

Figur 3 zeigt ein Blockdiagramm des bevorzugten Ausführungsbeispiels, bestehend aus einem Bildsensor 40 und einer Verarbeitungseinheit 42 mit verschiedenen Modulen 50, 52, 54, 56. Im bevorzugten Ausführungsbeispiel befindet sich der Bildsensor 40 hinter der Windschutzscheibe eines Kraftfahrzeuges im Bereich des Innenrückspiegels. In einer Variante des bevorzugten Ausführungsbeispiels ist der Bildsensor 40 in der Stoßstange und/oder in einem Seitenspiegel und/oder in der Rückleuchte eingebaut. Der Bildsensor 40 ist so ausgerichtet, dass der Bilderfassungsbereich wenigstens einen Teil der Umgebung des Kraftfahrzeuges umfasst. Als Bildsensor 40 wird im bevorzugten Ausführungsbeispiel ein schwarz/weiß CMOS-Bildsensor mit einer Auflösung von 640×480 Pixel mit 8-Bit-Grauwertauflösung verwendet. Der Bildsensor 40 weist eine frei konfigurierbare, abschnittweise lineare Kennlinie der Belichtungsempfindlichkeit auf, wobei die Anzahl der Abschnitte und/oder die Lage der Abschnitte und/oder die Größe der einzelnen Abschnitte und/oder wenigstens ein Parameter der linearen Funktionen in einem Abschnitt einstellbar ist. Alternativ oder zusätzlich wird der Gain und/oder der Offset und/oder die Integrationszeit eingestellt. Im bevorzugten Ausführungsbeispiel wird die Einstellung der Kennlinie der Belichtungsempfindlichkeit für alle Pixel des Bildsensors 40 gemeinsam eingestellt. Die einzelnen Module 50, 52, 54, 56 der Verarbeitungseinheit 42 sind in dem bevorzugten Ausführungsbeispiel in einem digitalen Mikroprozessor implementiert, der die nachfolgend beschriebenen Funktionen der Module 50, 52, 54, 56 als Programme, Programmteile oder Programmschritte realisiert. In einer Variante sind wenigstens zwei Mikroprozessoren vorgesehen, aufweiche die einzelnen Module 50, 52, 54, 56 verteilt sind. Selbstverständlich ist es ebenfalls möglich die einzelnen Module auf diskrete Verarbeitungseinheiten mit eigener Rechenausstattung zu verteilen. Die von dem Bildsensor 40 erzeugten Bildsignale werden über die Signalleitung 44 zur Verarbeitungseinheit 42 übertragen. Die Übertragung der Bildsignale erfolgt elektrisch und/oder optisch und/oder per Funk. Aus den eingehenden Bildsignalen, also den Kamerabildem, wird im Modul zur Bestimmung des Histogramms 50 das Histogramm der Grauwerte bestimmt. Das Histogramm der Grauwerte gibt die Häufigkeit der einzelnen Grauwerte eines Bildes oder eines Bildausschnittes an. Im bevorzugten Ausführungsbeispiel wird das Histogramm der Grauwerte aus einem Gesamtbild bestimmt. Zu jedem Grauwert wird im Modul zur Bestimmung des Histogramms 50 in Abhängigkeit der eingestellten Parameter, wie dem Gain und/oder dem Offset und/oder der Integrationszeit, und/oder den Parametern zur Einstellung der Kennlinie der Belichtungsempfindlichkeit, wie der Anzahl der Abschnitte der Kennlinie der Belichtungsempfindlichkeit und/oder der Lage der Abschnitte der Kennlinie der Belichtungsempfindlichkeit und/oder der Größe der Abschnitte der Kennlinie der Belichtungsempfindlichkeit und/oder der wenigstens eine Parameter der linearen Funktionen, die zugehörige Beleuchtungsstärke in frei definierbaren, virtuellen Einheiten bestimmt. Im Modul zur Bestimmung der optimalen Kennlinie 52 wird in Abhängigkeit des im vorhergehenden Modul zur Bestimmung des Histogramms 50 bestimmten Histogramms der Grauwerte die optimale Kennlinie berechnet. Bei N Grauwerten im Histogramm mit den jeweiligen Häufigkeiten $h_j$ und den zugehörigen Beleuchtungsstärken $\Phi_j$ ergibt sich eine Tabelle aus N Elementen, deren Eintrag i sich beispielsweise aus

$$g_i = \frac{G_{\max}}{\Phi_N} \sum_{j=1}^{i} h_j (\Phi_j - \Phi_{j-1}) \quad \text{mit } \Phi_0 = 0, \ 1 \leq i \leq N$$

berechnet, wobei $G_{\max}$ den maximal darstellbaren Grauwert bezeichnet. Die so berechnete Abbildungsfunktion von Beleuchtungsstärken $\Phi$ auf Grauwerte g stellt die informationstheoretisch optimale Kennlinie der Belichtungsempfindlichkeit für das gegebene Histogramm dar und ist eine optimale Kennlinie der Belichtungsempfindlichkeit. Die optimale Kennlinie der Belichtungsempfindlichkeit zeichnet sich grundsätzlich dadurch aus, dass nach der Einstellung der Kennlinie der Belichtungsempfindlichkeit des Bildsensors, die an die bestimmte optimale Kennlinie der Belichtungsempfindlichkeit approximiert ist, die Häufigkeit der einzelnen Grauwerte im Histogramm der Bildsignale, also des Kamerabildes des Bildsensors, annähernd konstant ist und/oder die Grauwertdichte des Histogramms der Bildsignale, also des Kamerabildes des Bildsensors, annähernd konstant ist. Die Häufigkeit eines Grauwerts bezeichnet dabei die Anzahl an Pixel innerhalb des Kamerabildes die diesen Grauwert aufweisen, bezogen auf die Gesamtanzahl an Pixel. Eine konstante Häufigkeit der Grauwerte innerhalb eines Histogramms eines Bildes wird als ein Gleichverteiltes Histogramm bezeichnet. Die Grauwertdichte bezeichnet dabei die Summe der Häufigkeiten $h(g_i)$ von Grauwerten $g_i$ in einem Intervall $\Delta g$ von Grauwerten bezogen auf dieses Intervall $\Delta g$: $(\Sigma h(g_i))/\Delta g$. Im Modul zur Approximation der Kennlinie der Belichtungsempfindlichkeit 54 wird die abschnittweise lineare Kennlinie der Belichtungsempfindlichkeit der Pixel des Bildsensors nun so gewählt, dass sie möglichst genau mit der erhaltenen optimalen Kennlinie übereinstimmt. Im bevorzugten Ausführungsbeispiel wird dies im Modul zur Approximation der Kennlinie der Belichtungsempfindlichkeit 54 durch eine numerische Minimierung des quadratischen Abstands zwischen der optimalen Kennlinie der Belichtungsempfindlichkeit und er abschnittweise linearen Kennlinie unter Variation der Parameter durchgeführt. Alternativ oder zusätzlich wird in einer Variante des bevorzugten Ausführungsbeispiels das in Hwa-Cho Yi: Sensordatenauswertung mit Fuzzy-Logik für das automatisierte Entgraten (München: Hanser-Verlag, 1993, Dissertation TU-Berlin, Seite 76-79) beschriebene Segmentierungsverfahren verwendet. Dieses Segmentierungsverfahren arbeitet nach der iterativen Endpunktmethode oder dem Prinzip der Suche nach dem längsten Segment. Die bestimmten Parameter, wie der Gain und/oder der Offset und/oder die Integrationszeit und/oder Anzahl der Abschnitte der Kennlinie der Belichtungsempfindlichkeit und/oder der Lage der Abschnitte der Kennlinie der Belichtungsempfindlichkeit und/oder der Größe der Abschnitte der Kennlinie der Belichtungsempfindlichkeit und/oder wenigstens ein Parameter der linearen Funktionen, werden vom Modul zur Approximation der Kennlinie der Belichtungsempfindlichkeit 54 an das Modul zur Erzeugung der Einstellsignale 56 übertragen. Im Modul zur Erzeugung der Einstellsignale 56 werden aus den bestimmten Parametern das wenigstens eine entsprechende Einstellsignal bestimmt und das wenigstens eine Einstellsignal wird über die Signalleitung 46 elektrisch und/oder optisch und/oder per Funk an den Bildsensor 40 übertragen. Im Bildsensor 40 erfolgt die Einstellung der Kennlinie der Belichtungsempfindlichkeit in Abhängigkeit von wenigstens einem Einstellsignal. Im bevorzugten Ausführungsbeispiel wird die Kennlinie der Belichtungsempfindlichkeit im auf die Ermittlung der optimalen Kennlinie der Belichtungsempfindlichkeit folgenden Bild wirksam. Alternativ oder zusätzlich wird in weiteren Varianten die Kennlinie der Belichtungsempfindlichkeit im selben Bild und/oder im übernächsten Bild und/oder in wenigstens einem weiteren Bild wirksam.

Die Verwendung des erfindungsgemäßen Verfahrens und/oder der erfindungsgemäßen Verarbeitungseinheit und/oder des erfindungsgemäßen Computerprogramms zur Einstellung der Kennlinie der Belichtungsempfindlichkeit wenigstens eines Pixels wenigstens eines Bildsensors wird deutlich, wenn der wenigstens eine Bildsensor ein Eingangsbild mit einem Grauwertkeil aufnimmt, wobei der Grauwertkeil aus zwei Abschnitten mit unterschiedlicher Steigung der Grauwerte besteht. Bei andersartig eingestellten und/oder gesteuerten und/oder geregelten Bildsensoren mit abschnittweise linearer Kennlinie tritt bei einer variablen Gesamtbeleuchtung des Grauwertkeils eine durch die geknickte Kennlinie der Belichtungsempfindlichkeit verursachte Scheinkontur auf, die nicht mit der Abschnittsgrenze des Grauwertkeils übereinstimmt. Durch das erfindungsgemäße Verfahren und/oder die erfindungsgemäße Verarbeitungseinheit und/oder das erfindungsgemäße Computerprogramm wird diese Scheinkontur dagegen genau auf oder zumindest sehr nahe an der Trennlinie liegen, auch wenn die Gesamtbeleuchtung verändert wird.

Das beschriebene Verfahren und/oder die Verarbeitungseinheit und/oder das Computerprogramm sind nicht auf die Einstellung der Kennlinie der Belichtungsempfindlichkeit eines Bildsensors in einem Kraftfahrzeug beschränkt. Vielmehr lässt sich die beschriebene Vorgehensweise mit den entsprechenden Merkmalen auch außerhalb der Kraftfahrzeugtechnik anwenden, ferner bei mehr als einem Bildsensor. Weiter ist das beschriebene Verfahren und/oder die Verarbeitungseinheit und/oder das Computerprogramm nicht auf die Einstellung der Kennlinie der Belichtungsempfindlichkeit beschränkt. Vielmehr ist die Vorgehensweise insbesondere auch zur Steuerung und/oder Regelung der Kennlinie der Belichtungsempfindlichkeit geeignet.

In einer Variante des beschriebenen Verfahrens und/oder der Verarbeitungseinheit und/oder des Computerprogramms erfolgt die Einstellung der Kennlinie der Belichtungsempfindlichkeit wenigstens eines Pixels wenigstens eines Bildsensors in Abhängigkeit wenigstens eines Bildausschnittes wenigstens eines Bildsensors. In einer ersten Ausführung ist vorgesehen, dass der Bildausschnitt von wenigstens einem Benutzer manuell spezifizierbar ist, während in einer weiteren Ausführung der Bildausschnitt von der Verarbeitungseinheit automatisiert bestimmt wird.

Bei einer weiteren Variante ist alternativ oder zusätzlich vorgesehen, dass die Einstellung der Kennlinie der Eelichtungsempfindlichkeit wenigstens eines Pixels wenigstens eines Bildsensors in Abhängigkeit von Bildsignalen, insbesondere wenigstens eines Bildes und/oder wenigstens eines Bildausschnittes, von wenigstens zwei oder mehr Bildsensoren erfolgt. Alternativ oder zusätzlich wird die Einstellung der Kennlinie Belichtungsempfindlichkeit wenigstens eines Pixels wenigstens eines Bildsensors in Abhängigkeit von Bildsignalen wenigstens einer Stereokamera durchgeführt. Die Stereokamera besteht dabei aus wenigstens zwei Bildsensoren, die im wesentlichen dieselbe Szene aufnehmen. Beispielsweise wird hierbei aus den Bildern und/oder Bildausschnitten ein gemeinsames Histogramm der Grauwerte berechnet und zur Bestimmung der optimalen Kennlinie der Belichtungsempfindlichkeit verwendet.

Allgemein ist die beschriebene Vorgehensweise nicht auf schwarz/weiß CMOS-Bildsensor mit einer Auflösung von 640x480 Pixel mit 8-Bit-Grauwertauflösung beschränkt. Vielmehr ist das Verfahren und/oder die Verarbeitungseinheit und/oder das Computerprogramm für alle Typen von Bildsensoren geeignet. Voraussetzung ist lediglich, dass die Bildsensoren eine konfigurierbare Kennlinie der Belichtungsempfindlichkeit mit Abschnitten mit Funktionen, insbesondere stetige und/oder lineare Funktionen, aufweisen. Beispielsweise wird in einer Variante ein CCD-Bildsensor verwendet. In einer weiteren Variante wird alternativ oder zusätzlich ein Bildsensor mit einer abschnittweise logarithmischen Kennlinie verwendet. Die beschriebene Vorgehensweise mit den entsprechenden Merkmalen ist weiterhin auch bei wenigstens einem Farbbildsensor anwendbar. Alternativ oder zusätzlich wird in einer weiteren Variante die Kennlinie der Belichtungsempfindlichkeit wenigstens eines Pixels wenigstens eines Bildsensors eingestellt.

**Patentansprüche**

1. Verfahren zur Einstellung der Kennlinie der Belichtungsempfindlichkeit wenigstens eines Pixels wenigstens eines Bildsensors (40), insbesondere in einem Kraftfahrzeug, wobei die Kennlinie der Belichtungsempfindlichkeit (20, 22, 24, 26) in Abhängigkeit von Bildsignalen der von dem wenigstens einen Bildsensor (40) erfassten Szene derart eingestellt wird, dass die Häufigkeit der Grauwerte des Histogramms von Bildsignalen des wenigstens einen Bildsensors (40) der erfassten Szene konstant ist, wobei im Bildsensor die Einstellung der in Abschnitten von linearen Funktionen gebildeten Kennlinie der Belichtungsempfindlichkeit (20, 22, 24, 26) in Abhängigkeit eines erzeugten Einstellsignals (40) erfolgt, wobei der Bildsensor (40) eine frei konfigurierbare, abschnittsweise lineare Kennlinie der Belichtungsempfindlichkeit (20, 22, 24, 26) aufweist, wobei die Anzahl der Abschnitte eingestellt wird.

**2.** Verfahren nach Anspruch 1, **dadurch gekennzeichnet, dass** der Gain und/oder der Offset und/oder die Integrationszeit und/oder wenigstens ein weiterer Parameter zur Einstellung der Kennlinie der Belichtungsempfindlichkeit des wenigstens einen Pixels des wenigstens einen Bildsensors eingestellt wird, wobei der wenigstens eine weitere Parameter zur Einstellung der Kennlinie der Belichtungsempfindlichkeit wenigstens ein Parameter zur Einstellung der Anzahl der Abschnitte der Kennlinie der Belichtungsempfindlichkeit und/oder wenigstens ein Parameter zur Einstellung der Lage der Abschnitte der Kennlinie der Belichtungsempfindlichkeit und/oder wenigstens ein Parameter zur Einstellung der Größe der Abschnitte der Kennlinie der Belichtungsempfindlichkeit und/oder wenigstens ein Parameter zur Einstellung der wenigstens einen Funktion ist.

**3.** Verfahren nach einem der vorhergehenden Ansprüche, **dadurch gekennzeichnet, dass** die Kennlinie der Belichtungsempfindlichkeit des wenigstens einen Pixels des wenigstens einen Bildsensors in Abhängigkeit von Bildsignalen von wenigstens zwei Bildsensoren, insbesondere wenigstens einer Stereokamera, eingestellt wird.

**4.** Vorrichtung mit wenigstens einem Bildsensor (40) und einer Verarbeitungseinheit (42) zur Erzeugung wenigstens eines Einstellsignals zur Einstellung der Kennlinie der Belichtungsempfindlichkeit (20, 22, 24, 26) wenigstens eines Pixels des wenigstens einen Bildsensors (40), insbesondere in einem Kraftfahrzeug, wobei ein Modul (56) der Verarbeitungseinheit (42) das wenigstens eine Einstellsignal derart erzeugt, um im Bildsensor (40) die in Abschnitten von linearen Funktionen gebildete Kennlinie der Belichtungsempfindlichkeit (20, 22, 24, 26) in Abhängigkeit von Bildsignalen der von dem wenigstens einen Bildsensor (40) erfassten Szene im Bildsensor (40) derart einzustellen, dass die Häufigkeit der Grauwerte des Histogramms von Bildsignalen des wenigstens einen Bildsensors (40) der erfassten Szene konstant ist, wobei der Bildsensor (40) eine frei konfigurierbare, abschnittsweise lineare Kennlinie der Belichtungsempfindlichkeit (20, 22, 24, 26) aufweist, wobei die Anzahl der Abschnitte eingestellt wird.

**5.** Vorrichtung nach Anspruch 4, **dadurch gekennzeichnet, dass** das Modul der Verarbeitungseinheit wenigstens ein Einstellsignal zur Einstellung des Gains und/oder des Offsets und/oder der Integrationszeit und/oder wenigstens ein weiteres Einstellsignal zur Einstellung der Kennlinie der Belichtungsempfindlichkeit des wenigstens einen Pixels des wenigstens einen Bildsensors erzeugt, wobei das wenigstens eine weitere Einstellsignal zur Einstellung der Kennlinie der Belichtungsempfindlichkeit wenigstens ein Einstellsignal zur Einstellung der Anzahl der Abschnitte der Kennlinie der Belichtungsempfindlichkeit und/oder wenigstens ein Einstellsignal zur Einstellung der Lage der Abschnitte der Kennlinie der Belichtungsempfindlichkeit und/oder wenigstens ein Einstellsignal zur Einstellung der Größe der Abschnitte der Kennlinie der Belichtungsempfindlichkeit und/oder wenigstens ein Einstellsignal zur Einstellung der wenigstens einen Funktion ist.

**6.** Vorrichtung nach einem der Ansprüche 4 oder 5, **dadurch gekennzeichnet, dass** das Modul der Verarbeitungseinheit das wenigstens eine Einstellsignal zur Einstellung der Kennlinie der Belichtungsempfindlichkeit des wenigstens einen Pixels des wenigstens einen Bildsensors in Abhängigkeit von Bildsignalen von wenigstens zwei Bildsensoren, insbesondere wenigstens einer Stereokamera, erzeugt.

**7.** Computerprogramm mit Programmcode-Mitteln, um alle Schritte von jedem beliebigen der Ansprüche 1 bis 3 durchzuführen, wenn das Programm auf einem Computer ausgeführt wird.

**Claims**

**1.** Method for adjusting the characteristic of the exposure sensitivity of at least one pixel of at least one image sensor (40), in particular in a motor vehicle, in which the characteristic of the exposure sensitivity (20, 22, 24, 26) is adjusted in such a manner, depending on image signals of the scene captured by at least one image sensor (40), that the frequency of the grey-scale values of the histogram of the image signals of the at least one image sensor (40) of the captured scene is constant, in which the adjustment of the characteristic of the exposure sensitivity (20, 22, 24, 26) in the image sensor, formed in sections by linear functions, is carried out depending on a generated adjustment signal (40), in which the image sensor (40) has a freely configurable characteristic made up of linear sections, of the exposure sensitivity (20, 22, 24, 26), with the number of sections being adjusted.

**2.** Method according to Claim 1, **characterized in that** the gain and/or the offset and/or the integration time and/or at least one further parameter for adjusting the characteristic of the exposure sensitivity of the at least one pixel of the at least one image sensor is adjusted, in which the at least one further parameter for adjusting the characteristic of the exposure sensitivity is at least one parameter for adjusting the number of sections of the characteristic of the exposure sensitivity and/or at least one parameter for adjusting the location of the sections of the characteristic of the exposure sensitivity and/or at least one parameter for adjusting the size of the sections of the characteristic of the exposure sensitivity and/or at least one parameter for adjusting the at least one function.

3. Method according to one of the preceding claims, **characterized in that** the characteristic of the exposure sensitivity of the at least one pixel of the at least one image sensor is adjusted depending on image signals from at least two image sensors, in particular from at least one stereo camera.

4. Apparatus having at least one image sensor (40) and a processing unit (42) for the generation of at least one adjustment signal for adjusting the characteristic of the exposure sensitivity (20, 22, 24, 26) of at least one pixel of the at least one image sensor (40), in particular in a motor vehicle, in which a module (56) of the processing unit (42) generates the at least one adjustment signal in such a manner as to adjust the characteristic of the exposure sensitivity (20, 22, 24, 26) in the image sensor (40), formed by linear functions in the image sensor (40) in such a manner, depending on image signals of the scene captured by at least one image sensor (40), that the frequency of the grey-scale values of the histogram of image signals of the at least one image sensor (40) of the captured scene is constant, with the image sensor (40) having an independently configurable characteristic, made up of linear sections, of the exposure sensitivity (20, 22, 24, 26), with the number of sections being adjusted.

5. Apparatus according to Claim 4, **characterized in that** the module of the processing unit generates at least one adjustment signal for adjusting the gain and/or the offset and/or the integration time and/or at least one further adjustment signal for adjusting the characteristic of the exposure sensitivity of the at least one pixel of the at least one image sensor, in which the at least one further adjustment signal for adjusting the characteristic of the exposure sensitivity is at least one adjustment signal for adjusting the number of sections of the characteristic of the exposure sensitivity and/or at least one adjustment signal for adjusting the location of the sections of the characteristic of the exposure sensitivity and/or at least one adjustment signal for adjusting the size of the sections of the characteristic of the exposure sensitivity and/or at least one adjustment signal for adjusting the at least one function.

6. Apparatus according to one of Claims 4 or 5, **characterized in that** the module of the processing unit generates the at least one adjustment signal for adjusting the characteristic of the exposure sensitivity of the at least one pixel of the at least one image sensor depending on image signals from at least two image sensors, in particular from at least one stereo camera.

7. Computer program with program code means to execute all steps from any of Claims 1 to 3, when the program is run on a computer.

**Revendications**

1. Procédé de réglage de la courbe caractéristique de sensibilité lumineuse d'au moins un pixel d'au moins un capteur d'image (40), notamment dans un véhicule automobile selon lequel
on règle la courbe caractéristique de la sensibilité d'éclairage (20, 22, 24, 26) en fonction des signaux d'image de la scène captée par au moins un capteur d'image (40) de façon que la fréquence des niveaux de gris de l'histogramme des signaux d'image d'au moins un capteur d'image (40) de la scène saisie soit constante,
dans le capteur d'image, on règle la courbe caractéristique de la sensibilité d'éclairage (20, 22, 24, 26) formée de segments de fonctions linéaires, selon un signal de réglage (40), généré, le capteur d'image (40) ayant une courbe linéaire par segments, configurée librement pour la sensibilité d'éclairage (20, 22, 24, 26), et le nombre de segments est réglable.

2. Procédé selon la revendication 1,
**caractérisé en ce qu'**
on règle le gain et/ou le décalage et/ou le temps d'intégration et/ou au moins un autre paramètre pour régler la courbe caractéristique de la sensibilité d'éclairage d'au moins un pixel d'au moins un capteur d'image, selon lequel cet autre paramètre de réglage de la courbe caractéristique de la sensibilité lumineuse est au moins un paramètre de réglage du nombre de segments de la courbe caractéristique de la sensibilité d'éclairage et/ou au moins un paramètre de réglage de la position des segments de la courbe caractéristique de la sensibilité d'éclairage et/ou au moins un paramètre de réglage de la position des segments de la position de la courbe caractéristique de la sensibilité d'éclairage et/ou au moins un paramètre de réglage de la position des segments de la courbe caractéristique de la sensibilité d'éclairage et/ou au moins un paramètre de réglage de la dimension des segments de la courbe caractéristique de la sensibilité d'éclairage et/ou au moins un paramètre de réglage d'au moins une fonction.

**3.** Procédé selon l'une des revendications précédentes,
**caractérisé en ce que**
la courbe caractéristique de la sensibilité d'éclairage d'au moins un pixel d'au moins un capteur d'image est réglée en fonction des signaux d'image d'au moins deux capteurs d'image, notamment d'au moins une caméra stéréoscopique.

**4.** Dispositif comportant au moins un capteur d'image (40) et une unité de traitement (42) pour générer au moins un signal de réglage de la courbe caractéristique de la sensibilité d'éclairage (20, 22, 24, 26) d'au moins un pixel d'au moins un capteur d'image (40), notamment dans un véhicule automobile, selon lequel un module (56) de l'unité de traitement (42) génère au moins un signal de réglage pour régler dans le capteur d'image (40) la courbe caractéristique de la sensibilité d'éclairage (20, 22, 24, 26) formée de segments de fonctions linéaires, selon des signaux d'image de la scène saisie par au moins un capteur d'image (40) de façon que la fréquence des niveaux de gris de l'histogramme des signaux d'image de la scène saisie par au moins un capteur d'image (60) soit constante, le capteur d'image (40) ayant une caractéristique linéaire par segments à configuration libre de la sensibilité d'éclairage (20, 22, 24, 26), le nombre de segments étant réglable.

**5.** Dispositif selon la revendication 4,
**caractérisé en ce que**
le module de l'unité de traitement génère au moins un signal de réglage pour régler le gain et/ ou le décalage et/ou le temps d'intégration et/ ou au moins un autre signal de réglage pour régler la courbe caractéristique de la sensibilité d'éclairage d'au moins un pixel d'au moins un capteur d'image,
au moins un autre signal de réglage servant à régler la courbe caractéristique de la sensibilité d'éclairage étant au moins un signal de réglage du nombre de segments de la courbe caractéristique de la sensibilité d'éclairage et/ou au moins un signal de réglage de la position des segments de la courbe caractéristique de la sensibilité d'éclairage et/ou au moins un signal de réglage de la grandeur du segment de la sensibilité d'éclairage de la courbe caractéristique et/ou au moins un signal de réglage d'au moins une fonction.

**6.** Dispositif selon l'une des revendications 4 ou 5,
**caractérisé en ce que**
le module de l'unité de traitement génère au moins un signal de réglage pour régler la courbe caractéristique de la sensibilité d'éclairage d'au moins un pixel d'au moins un capteur d'image en fonction des signaux d'image d'au moins deux capteurs d'image, notamment d'au moins une caméra stéréoscopique.

**7.** Programme d'ordinateur comportant des moyens de codes de programmes pour exécuter toutes les étapes de l'une quelconque des revendications 1 à 3, lorsque le programme est exécuté sur un ordinateur.

**Fig. 1**

**Fig. 2**

Fig. 3

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- US 634568 A
- US 6345681 B
- US 5937090 A
- US 5387930 A

### In der Beschreibung aufgeführte Nicht-Patentliteratur

- Dissertation. Hanser-Verlag, 1993, 76-79